# EUROPÄISCHE PATENTSCHRIFT

(11) **EP 1 580 048 B1**
(45) Veröffentlichungstag und Bekanntmachung des Hinweises auf die Patenterteilung: **02.05.2007**
(21) Anmeldenummer: 05004848.7
(22) Anmeldetag: 04.03.2005
(51) Int. Cl.: B60H 1/00, B62D 25/14

(54) **Querträger mit integrierter Luftführung für ein Kraftfahrzeug**
Cross beam for a vehicle with an integrated air duct
Poutre transversale de véhicule comprenant un conduit d'air intégré

(30) Priorität: 25.03.2004 DE 102004015086
(43) Veröffentlichungstag der Anmeldung: 28.09.2005
(73) Patentinhaber: Behr GmbH & Co. KG, 70469 Stuttgart (DE)
(72) Erfinder: Derleth, Martin, Dipl.-Ing., 97453 Schonungen (DE); Schmitz, Jochen, 71229 Leonberg (DE); Wolf, Walter, Dipl.-Ing., 71570 Oppenweiler-Zell (DE)
(74) Vertreter: Grauel, Andreas

(56) Entgegenhaltungen:
- DE-U1- 7 805 175
- US-A- 5 234 246
- US-A- 5 354 114
- PATENT ABSTRACTS OF JAPAN Bd. 010, Nr. 365 (M-542), 6. Dezember 1986 (1986-12-06) -& JP 61 160316 A (TOYOTA MOTOR CORP), 21. Juli 1986 (1986-07-21)

## Beschreibung

Die Erfindung betrifft einen Querträger mit integrierter Luftführung für ein Kraftfahrzeug gemäß dem Oberbegriff des Anspruchs 1.

Aus der DE 100 64 522 A1 ist ein Querträger zum Anordnen zwischen den A-Säulen eines Kraftfahrzeugs mit einem im Wesentlichen rohrartigen Grundkörper bekannt, in dem wenigstens ein Kanal vorgesehen ist. Um ein verbessertes Leichtbauteil zur Verfügung zu stellen, das einfach, mit wenigen Arbeitsschritten und daher kostengünstig herzustellen ist, ist der Grundkörper innen mit Kunststoff ausgekleidet zur Bildung von aus Kunststoff bestehenden Kanalwänden.

Die Druckschrift US 5,234,246 offenbart ein Armaturenbrett mit einem starren und selbsttragenden Rahmen, an welchem eine Abdeckung aus einem Schaummaterial angeordnet ist.

Ferner ist aus der EP 1 075 972 A2 ein Luftleitsystem für ein Kraftfahrzeug bekannt, gemäß dem in einem geschlossenen Querträger ein Luftführungsrohr integriert ist, wobei der Hohlträger mit einer auf die Träger-Innenfläche aufgebrachten Wärmeisolationsschicht versehen ist.

Derartige Querträger lassen jedoch noch Wünsche offen, insbesondere in Hinblick auf die Anzahl der Teile und die damit in Verbindung stehenden Herstellungskosten.

Es ist Aufgabe der Erfindung, einen verbesserten Querträger mit integrierter Luftführung zur Verfügung zu stellen.

Diese Aufgabe wird gelöst durch einen Querträger mit integrierter Luftführung mit den Merkmalen des Anspruchs 1. Vorteilhafte Ausgestaltungen sind Gegenstand der Unteransprüche.

Es ist ein Querträger mit integrierter Luftführung vorgesehen, wobei eine Isolation vorgesehen ist, die zumindest benachbart zu einem Teil der Außenfläche des Querträgers angeordnet ist. Bevorzugt erfolgt die Anbringung der Isolation im Falle eines aus mehreren Teilen bestehenden Querträgers nach dem Fügen desselben, gegebenenfalls auch nach dem Anbringen von Anbindungen und/oder Haltern an den Querträger. Die Isolation kann rein auf den Querträger beschränkt sein, jedoch auch Anbindungen, Halter und/oder sonstige mit dem Querträger verbundene Elemente in sich aufnehmen. Da die Isolation von außen angebracht wird, ist die Montage einfach und der Strömungsquerschnitt wird nicht verkleinert. Besonders vorteilhaft ist ferner, dass, da kein direkter Kontakt zwischen der Isolation und der konditionierten Luft besteht, das Problem mit sich niederschlagender Feuchtigkeit (Fogging) relativ unkritisch ist, so dass die Isolation nur bedingt Feuchtigkeit ausgesetzt ist.

Erfindungsgemäß übernimmt die Isolation Zusatzfunktionen, wie insbesondere ganz oder teilweise die Instrumententafel, Instrumententafel-Aufnahmen, Montageträger, Kabelführungen, Aufnahmen für Bauteile, Behälter, z.B. das Handschuhfach, oder weitere Luftführungen, z.B. für die Kühlung der Elektronik, eine Kühlung eines Ablagefachs, bilden.

Die Isolation wird vorzugsweise durch zwei oder mehr Teile gebildet, die um den Querträger herum angeordnet und befestigt werden. Die Befestigung kann beispielsweise mittels Kleben erfolgen. Jedoch sind beliebige andere Befestigungsarten möglich, insbesondere kann die Anbringung auch lösbar erfolgen, so dass eine Reparatur oder ein Austausch von Teilen vereinfacht wird. Ferner erleichtert eine lösbare Anbringung die Wertstofftrennung für das Recycling.

Erfindungsgemäß weist die Isolation mindestens einen Kanal auf. Dabei kann es sich insbesondere um einen Kabel- oder einen Luftkanal handeln. Der Kanal kann auf der Außenfläche der Isolation angeordnet sein, so dass eine thermische Trennung vom Querträger gewährleistet ist. Alternativ ist eine Anordnung in direkter Nachbarschaft des Querträgers möglich, so dass die Temperatur im Kanal etwa der der durch den Querträger geführten Luft entspricht.

Die Isolation ist vorzugsweise einstückig mit der Instrumententafel oder einem Teil hiervon ausgebildet. Dies ermöglicht eine deutliche Reduzierung der Teile und vereinfacht die Montage. Ferner wird die Isolation in Folge der Dicke der Isolation optimiert.

Als Isolationsmaterialien kommen insbesondere Schäume, wie PU-Schäume, Partikelschäume, Mineralschäume mit unterschiedlichsten Bindern in Frage. So sind insbesondere EPP, EPE, EPS, EPS/PPO, XPP, XPE oder chemisch oder physikalisch geschäumte Polyolefine geeignet.

Die Isolation kann vorzugsweise von außen auf den Querträger aufgesprüht, aufgeschäumt, gestrichen oder auf andere Weise aufgebracht werden.

Der Querträger bildet vorzugsweise zumindest über Teilbereiche direkt einen Teil des Luftkanals von einer Klimaanlage zu Ausströmstellen in den Fahrzeuginnenraum, so dass kein zusätzlicher Luftkanal im Querträger vorgesehen ist und die Zahl der Teile minimiert und der Aufbau vereinfacht werden kann.

Bevorzugt ist dabei mindestens ein Luftleitelement, insbesondere aus Kunststoff, vorgesehen, welches die von der Klimaanlage kommende Luft in den Querträger einleitet oder aus ihm in Richtung der Düsen zum Fahrzeuginnenraum hin ausleitet.

Im Folgenden wird die Erfindung anhand mehrerer Ausführungsbeispiele unter Bezugnahme auf die Zeichnung im Einzelnen erläutert. In der Zeichnung zeigen:
- Fig. 1: einen Schnitt quer durch einen Querträger mit Isolation gemäß dem Stand der Technik.
- Fig. 2: einen Schnitt quer durch einen Querträger mit Isolation gemäß dem ersten Ausführungsbeispiel,
- Fig. 3: einen Schnitt quer durch eine Instrumententafel mit Querträger gemäß dem zweiten Ausführungsbeispiel,

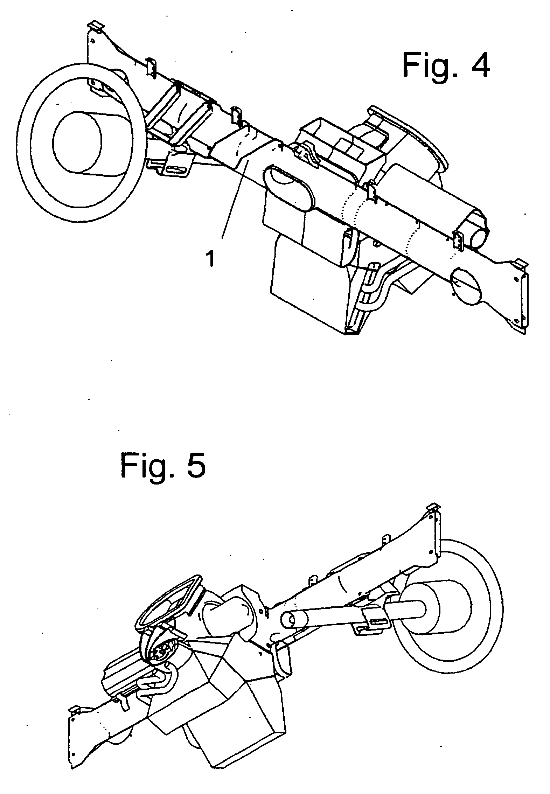

- Fig. 4: eine perspektivische Ansicht eines bekannten Querträgers mit Anbauten ohne Darstellung der Isolation, und
- Fig. 5: eine andere perspektivische Ansicht des bekannten Querträgers von Fig. 4 ohne Isolation.

Ein Querträger 1 eines Kraftfahrzeugs mit integrierter Luftführung wird gemäß dem Stand der Technik durch eine erste Halbschale 2 und eine zweite Halbschale 3 gebildet. Dabei weist die erste Halbschale 2 drei Öffnungen für den Luftaustritt durch Düsen (Mittel- und Seitendüsen) in den Fahrzeuginnenraum und die zweite Halbschale 3 eine zentrale Öffnung für den Lufteintritt der von einer Klimaanlage kommenden Luft auf. In die Öffnungen sind jeweils Luftleitelemente gesteckt.

Bei den beiden den Querträger 1 bildenden Halbschalen 2 und 3 handelt es sich jeweils um eine Metallstruktur, die mittels Tiefziehen und nachfolgendem Bearbeiten hergestellt ist. Andere Herstellungsarten, wie insbesondere Strangpressen oder Walzen, sind ebenfalls möglich. Das Profil kann auch aus einstückigen Profilkörpern gebildet sein und im Prinzip beliebige Querschnittsformen aufweisen. Ebenfalls sind auch mehrere Kammern im Profilquerschnitt möglich. Die Profilverläufe können insbesondere gerade, gleichmäßig gekrümmt bis hin zu räumlich gekrümmt sein.

Die Enden des Querträgers 1 sind in Folge des Umformvorgangs verbreitert ausgebildet, so dass sie als versteifende Elemente dienen. Dadurch ergibt sich, dass das Verhältnis einer ersten Fläche zu einem ersten Umfang in einem mittleren Querschnitt größer als das Verhältnis einer zweiten Fläche zu einem zweiten Umfang in den beiden Endbereichen ist. Die verbreiterte Ausgestaltung der Endbereiche ermöglicht eine momentensteife Anbindung.

Zur Begrenzung einer Verformung der Endbereiche durch zu große Krafteinwirkung, beispielsweise von Montageschrauben, sind Stützkörper, vorliegend in Form von Hülsen (nicht dargestellt), vorgesehen, welche in Verlängerung von Montagebohrungen, die in den Endbereichen zwecks Anbringung des Querträgers 1 vorgesehen sind, im Innenraum des Querträgers 1 angeordnet sind.

An den Längsseiten der Halbschalen 2 und 3 sind jeweils nach außen abstehende Ränder vorgesehen, die in Anlage miteinander gebracht und auf bekannte Weise zusammengefügt werden. Der Innenraum zwischen den beiden Halbschalen 2 und 3 ist hohl und entgegen der oben genannten DE 100 64 522 A1 ohne eine durchgehende, einen Luftkanal bildende Verkleidung ausgebildet, so dass die direkte Durchführung von Luft möglich ist. Damit ist ein Teil des Belüftungssystems direkt in den Querträger 1 integriert.

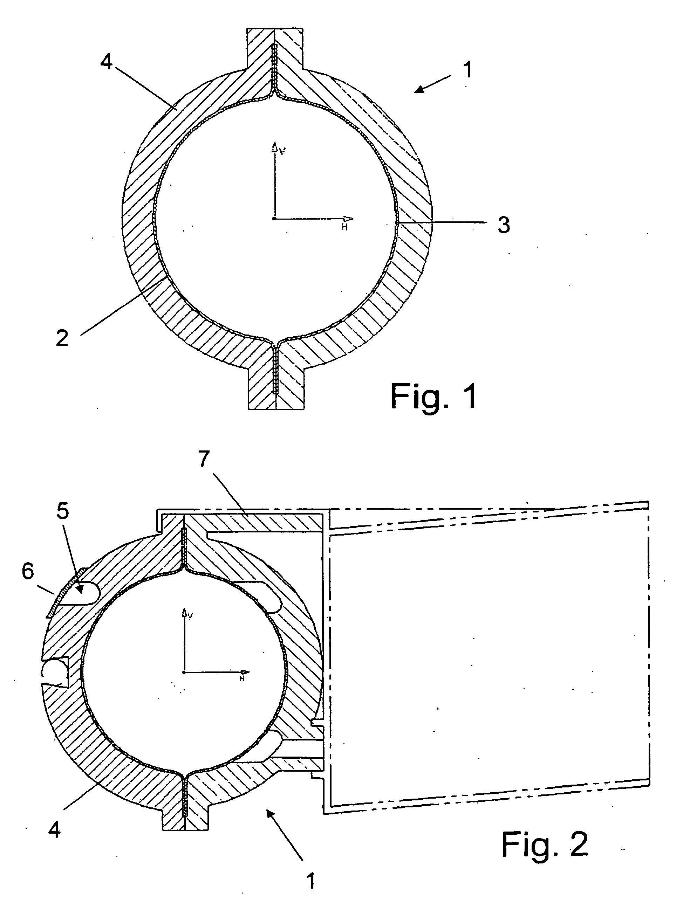

Fig. 1 zeigt einen Schnitt quer durch den Querträger 1, auf dem von außen als Isolation 4 zwei Isolationsschalen angebracht sind, jeweils eine auf jeder Halbschale 2 bzw. 3. Die Außenkontur des Querträgers 1 entspricht hierbei im Wesentlichen der Innenkontur der Isolationsschalen. Vorliegend ist die Isolation 4 angeklebt, jedoch sind auch andere Befestigungsmöglichkeiten möglich, insbesondere einhängen oder anclipsen. Im Falle eines anclipsens sind insbesondere Hinterschneidungen in Form eines Schwalbenschwanzes geeignet. Ebenfalls sind Elemente möglich, wie sie in der DE 198 02 055 A1 offenbart sind. Die Isolation 4 besteht gemäß dem ersten Ausführungsbeispiel aus einem Schaumstoff.

Gemäß dem ersten, in Fig. 2 dargestellten Ausführungsbeispiel der Erfindung sind wiederum als Isolation 4 zwei Isolationsschalen vorgesehen, diese weisen jedoch im Unterschied zum Stand der Technik Kanäle 5 auf, insbesondere für die Durchführung von Kabeln oder Luft. Die Kanäle 5 können auf der Außenseite, wie in Fig. 2 links dargestellt, oder auf der Innenseite, d.h. Angrenzend an den Querträger 1, vorgesehen sein, wie in Fig. 2 rechts dargestellt. Ferner können die Kanäle 5 eine Abdeckung 6 aufweisen, wie in Fig. 2 links oben dargestellt. Die Kanäle 5 können, wie in Fig. 2 rechts unten dargestellt, auch mit der Außenseite verbunden sein, beispielsweise für eine Klimatisierung und/oder Belüftung von Ablagefächern, Cupholder, für eine Kühlung von DIN-Einschüben, einem Radio, Elektronik-Bauteilen, etc.

Ferner kann an der Isolation 4 auch eine Auflage 7 vorgesehen sein, welche beispielsweise als Auflage für Bauteile, wie die Instrumententafel, dienen kann. Die Isolation 4 gemäß dem Ausführungsbeispiel besteht aus einem Partikelschaumstoff, vorwiegend EPP.

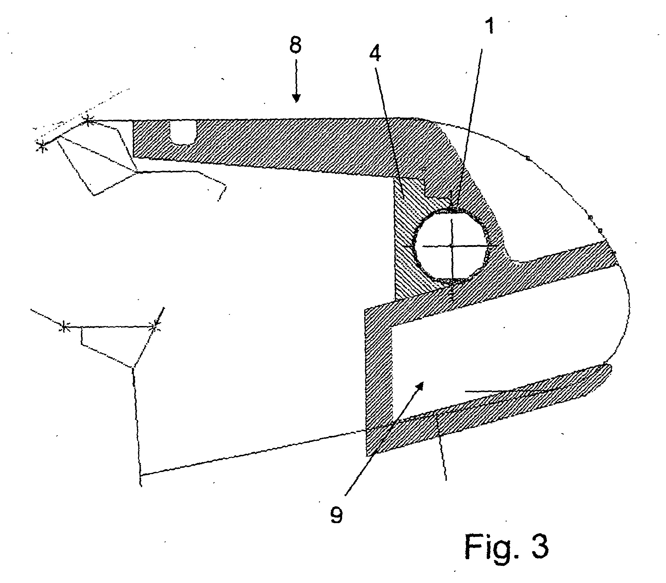

Gemäß dem zweiten in Fig. 3 dargestellten Ausführungsbeispiel ist als Isolation 4 anstelle der Isolationsschalen ein zweiteiliges Isolationsteil vorgesehen, das zum Fahrzeuginnenraum hin die Instrumententafel 8 bildet und die verschiedenen Armaturen aufnimmt. Ferner ist in dem Isolationsteil das Handschuhfach 9 sowie andere Fächer vorgesehen. Ebenfalls sind die Düsen hierin angeordnet, so dass der gesamte Luftkanal ausgehend von der Klimaanlage bis zu den Düsen isoliert ist und dadurch der Wärmeverlust bzw. die Erwärmung und somit auch der Energieverbrauch minimiert werden kann.

Die Isolation 4 besteht gemäß dem zweiten Ausführungsbeispiel aus EPP, das an seiner in den Fahrzeuginnenraum ragenden Fläche mit einer Dekorschicht versehen ist. Eine derartige Ausgestaltung verringert die Anzahl der zu montierenden Teile erheblich. Ferner ist die Instrumententafel 6 optimal durch den direkt hierin aufgenommenen Querträger 1 unterstützt.

Gemäß einem weiteren, nicht in der Zeichnung dargestellten Ausführungsbeispiel erfolgt die Aufbringung einer Isolation durch das Aufsprühen eines bei Luftkontakt aufschäumenden und aushärtenden Materials. Dieses passt sich optimal an den Querträger und sonstige Elemente an.

Die Isolation kann beispielsweise auch als Schaum, PU-Schaum ohne/mit Zusatzstoffen, wie zum Beispiel Mineralschaum-Partikel, Kork, Blähglas, Bims, usw. aufgesprüht werden.

### Bezugszeichenliste

- 1: Querträger
- 2: erste Halbschale
- 3: zweite Halbschale
- 4: Isolation
- 5: Kanal
- 6: Abdeckung
- 7: Auflage
- 8: Instrumententafel
- 9: Handschuhfach

## Patentansprüche

1. Querträger mit integrierter Luftführung, insbesondere für ein Kraftfahrzeug, wobei eine Isolation (4) vorgesehen ist, die zumindest benachbart zu einem Teil der Außenfläche des Querträgers (1) angeordnet ist, **dadurch gekennzeichnet, dass** die Isolation (4) mindestens einen Kanal (5) aufweist.

2. Querträger nach Anspruch 1, **dadurch gekennzeichnet, dass** die Isolation (4) durch zwei oder mehr Teile gebildet ist.

3. Querträger nach Anspruch 1 oder 2, **dadurch gekennzeichnet, dass** der Kanal (5) ein Kabelkanal oder ein Luftkanal ist.

4. Querträger nach einem der Ansprüche 1 bis 3, **dadurch gekennzeichnet, dass** der Kanal (5) auf der Außenfläche der Isolation (4) angeordnet ist.

5. Querträger nach einem der Ansprüche 1 bis 4, **dadurch gekennzeichnet, dass** der Kanal (5) eine Luftführung zur Kühlung eines beabstandet vom Querträger angeordneten Bereichs ist.

6. Querträger nach einem der vorhergehenden Ansprüche, **dadurch gekennzeichnet, dass** die Isolation (4) einstückig mit der Instrumententafel (6) oder einem Teil hiervon gebildet ist.

7. Querträger nach einem der vorhergehenden Ansprüche, **dadurch gekennzeichnet, dass** die Isolation (4) durch einen Schaumstoff, insbesondere einen PU-Schaum, einen Partikelschaum, einen Mineralschaum, gebildet ist.

8. Querträger nach einem der vorhergehenden Ansprüche, **dadurch gekennzeichnet, dass** der Querträger (1) zumindest über Teilbereiche direkt einen Teil des Luftkanals von Klimaanlage zu Ausströmstellen in den Fahrzeuginnenraum bildet.

9. Querträger nach einem der vorhergehenden Ansprüche, **dadurch gekennzeichnet, dass** mindestens ein Luftleitelement vorgesehen ist, welches die von der Klimaanlage kommende Luft in den Querträger (1) einleitet oder aus ihm ausleitet.

10. Querträger nach einem der vorhergehenden Ansprüche, **dadurch gekennzeichnet, dass** die Isolation außen auf den Querträger (1) aufgesprüht, aufgeschäumt, gestrichen, oder in anderer Art und Weise aufgebracht ist.

## Claims

1. Cross-beam with an integrated air duct, in particular for a motor vehicle, with insulation (4) provided, which is arranged at least close to part of the outside surface of the cross-beam (1), **characterised in that** the insulation (4) comprises at least one channel (5).

2. Cross-beam according to Claim 1, **characterised in that** the insulation (4) is formed of two or more parts.

3. Cross-beam according to Claims 1 or 2, **characterised in that** the channel (5) is a cable channel or an air channel.

4. Cross-beam according to any of Claims 1 to 3, **characterised in that** the channel (5) is arranged on the outside surface of the insulation (4).

5. Cross-beam according to any of Claims 1 to 4, **characterised in that** the channel (5) is an air duct for cooling an area remote from the cross-beam.

6. Cross-beam according to any of the preceding claims, **characterised in that** the insulation (4) is formed integrally with the instrument panel (6) or with part of it.

7. Cross-beam according to any of the preceding claims, **characterised in that** the insulation (4) consists of a foam material, in particular a PU foam, a particle foam or a mineral foam.

8. Cross-beam according to any of the preceding claims, **characterised in that** at least in some areas the cross-beam (1) directly forms part of the air duct of an air-conditioning unit leading to outflow points in the inside space of the vehicle.

9. Cross-beam according to any of the preceding claims, **characterised in that** at least one air duct element is provided, which leads the air coming from the air-conditioning unit into or out of the cross-beam (1).

10. Cross-beam according to any of the preceding claims, **characterised in that** the insulation on the outside of the cross-beam (1) is sprayed, foamed or brushed on, or applied in some other way.

## Revendications

1. Traverse avec conduit d'air intégré, en particulier pour un véhicule, une isolation (4) étant prévue, laquelle est disposée au moins à proximité d'une partie de la surface extérieure de la traverse (1), **caractérisée en ce que** l'isolation (4) présente au moins un canal (5).

2. Traverse selon la revendication 1, **caractérisée en ce que** l'isolation (4) est formée par deux parties ou plus.

3. Traverse selon la revendication 1 ou 2, **caractérisée en que** le canal (5) est un caniveau de câbles ou une gaine de ventilation.

4. Traverse selon l'une quelconque des revendications 1 à 3, **caractérisée en ce que** le canal (5) est disposé sur la surface extérieure de l'isolation (4).

5. Traverse selon l'une quelconque des revendications 1 à 4, **caractérisée en ce que** le canal (5) est un conduit d'air pour le refroidissement d'une zone disposée à distance de la traverse.

6. Traverse selon l'une quelconque des revendications précédentes, **caractérisée en ce que** l'isolation (4) est formée d'une seule pièce avec le tableau de bord (6) ou une partie de celui-ci.

7. Traverse selon l'une quelconque des revendications précédentes, **caractérisée en ce que** l'isolation (4) est formée par une mousse, en particulier une mousse de polyuréthanne, une mousse à particules, une mousse minérale.

8. Traverse selon l'une quelconque des revendications précédentes, **caractérisée en ce que** la traverse (1) forme au moins sur des zones partielles directement une partie du conduit d'air de l'installation de climatisation vers des emplacements d'évacuation dans l'habitacle du véhicule.

9. Traverse selon l'une quelconque des revendications précédentes, **caractérisée en ce qu'**il est prévu au moins un élément déflecteur d'air qui introduit l'air arrivant de l'installation de climatisation dans la traverse (1) ou l'évacué de celle-ci.

10. Traverse selon l'une quelconque des revendications précédentes, **caractérisée en ce que** l'isolation est appliquée à l'extérieur sur la traverse (1) par pulvérisation, moussage, enduction, ou d'une autre façon.
